# EUROPÄISCHE PATENTSCHRIFT

(11) **EP 3 767 244 B1**
(45) Veröffentlichungstag und Bekanntmachung des Hinweises auf die Patenterteilung: **15.09.2021**
(21) Anmeldenummer: 19186703.5
(22) Anmeldetag: 17.07.2019
(51) Int. Cl.: G01D 5/48

(54) **DREHGEBER**
ROTARY ENCODER
ENCODEUR ROTATIF

(43) Veröffentlichungstag der Anmeldung: 20.01.2021
(73) Patentinhaber: SICK AG, 79183 Waldkirch (DE)
(72) Erfinder: Weisser, Rafael, 78112 St. Georgen (DE); Mucha, Markus, 78052 Villingen-Schwenningen (DE); Ahmad, Saif, 58453 Witten (DE)
(74) Vertreter: Ludewigt, Christoph

(56) Entgegenhaltungen:
- EP-A2- 1 211 486
- WO-A1-2009/088378
- US-A1- 2001 038 281
- US-B1- 6 501 263

## Beschreibung

Die Erfindung betrifft einen Drehgeber zum Detektieren eines Drehwinkels einer Geberwelle gemäß dem Anspruch 1.

In vielfältigen Industrieanwendungen werden Drehgeber als Sensor eingesetzt, um einen Drehwinkel von einer sich um eine Drehachse rotierenden Welle zu bestimmen. Hierzu ist der Drehgeber als eine separate eigenständige Einheit oder als Bestandteil eines Motorfeedbacksystems vorgesehen, wobei der Drehgeber auf einem optischen, kapazitiven, magnetischen oder magnetostriktiven Messprinzip beruht.

Je nach dem jeweiligen Messprinzip weist der Drehgeber unterschiedliche Vor- und Nachteile auf.

Bei einem magnetostriktiven Messprinzip weist der Sensor einen Wellenleiter auf, an dessen einem Ende ein Messwandler und an dem anderen Ende ein Dämpfungselement angeordnet sind. Mittels eines elektrischen Impulses wird ein Magnetfeld aufgebaut, das sich entlang des Wellenleiters ausbreitet. Ein Positionsmagnet bewirkt mit seinem Magnetfeld zusammen mit dem erzeugten Magnetfeld einen mechanischen Impuls, der auf dem Wellenleiter erzeugt wird und sich mit gleichmäßiger Geschwindigkeit über den Wellenleiter bewegt.

Der mechanische Impuls wird durch den Messwandler erfasst, wobei aus einer Zeitdifferenz zwischen dem ursprünglichen elektrischen Impuls und dem erfassten mechanischen Impuls eine absolute Position des Positionsmagneten errechnet wird.

Das beschriebene magnetostriktive Messprinzip ist bei linearen Positionssensoren bekannt. Drehgeber der gleichen Art sind ebenfalls aus den US 6,501,263 B1, WO 2009/88378 A1 und EP 1 211 486 A2 bekannt.

Es ist eine Aufgabe der Erfindung, einen Drehgeber zum Detektieren eines Drehwinkels einer Geberwelle zur Verfügung zu stellen, der robust und preiswert aufgebaut ist.

Die Aufgabe wird erfindungsgemäß durch einen Drehgeber zum Detektieren eines Drehwinkels einer Geberwelle mit den Merkmalen des Anspruchs 1 gelöst.

Hierdurch ergibt sich der Vorteil, dass der Drehgeber sehr platzsparend bzw. flach ausgebildet sein kann.

Gemäß einem bevorzugten Ausführungsbeispiel ist der Messwandlerderart ausgebildet, dass eine Position wenigstens eines der Positionsmagneten mit dem Wellenleiter detektierbar ist, um den Drehwinkel der Geberwelle zu bestimmen. Dadurch ist es zu jeder Zeit sichergestellt, dass der Messwandler einen Positionswert erhält.

Gemäß einem weiteren bevorzugten Ausführungsbeispiel ist der Wellenleiter an dem Überlappungsbereich durch ein Isolierelement isoliert, um einen elektrischen Kontakt des Wellenleiters an dem Überlappungsbereich auszuschließen.

Ferner beträgt gemäß einem weiteren bevorzugten Ausführungsbeispiel der vorgegebene Winkel 180°, um eine eindeutige Unterscheidung zwischen den beiden Positionsmagneten zu erhalten. Vorteilhafterweise sind drei oder mehr Positionsmagnete vorgesehen, die jeweils in gleichen Winkelabständen voneinander beabstandet sind.

Dies hat den Vorteil, dass mehrere Signale vom Messwandler empfangen werden, wodurch die Bestimmung des Drehwinkels durch einen Vergleich der Signale genauer sein kann. Hierbei bedeutet in diesem Zusammenhang ein Signal des Positionsmagneten den mechanischen Impuls, der vom Positionsmagnet auf dem Wellenleiter ausgelöst, vom Messwandler erfasst und als die Position des Positionsmagneten am Wellenleiter bestimmt wird.

Gemäß einem weiteren bevorzugten Ausführungsbeispiel ist ein Signalmuster eines sich über dem Überlappungsbereich befindlichen Positionsmagneten oder eine Position des Überlappungsbereichs in Bezug auf einen Umfang des kreisförmig gebogenen Wellenleiters in dem Messwandler hinterlegt. Dadurch ist es anhand des Signalmusters sicher bestimmbar, welcher Positionsmagnet sich gerade über dem Überlappungsbereich befindet. Vorteilhafterweise ignoriert der Messwandler ein Signal des jeweiligen Positionsmagneten, der sich gerade über dem Überlappungsbereich befindet, bei der Bestimmung des Drehwinkels der Geberwelle. Somit ist sichergestellt, dass eine genaue Bestimmung des Drehwinkels gewährleistet ist.

Weiterhin sind gemäß einem weiteren bevorzugten Ausführungsbeispiel die Positionsmagnete U-förmig oder H-förmig ausgebildet, so dass die Positionsmagnete auf einfache Art und Weise exakt an den Wellenleiter geführt werden.

Gemäß einem weiteren bevorzugten Ausführungsbeispiel ist der Messwandler derart ausgelegt, dass eine Singleturn- und/oder Multiturn-Messung mit einem absoluten Drehwinkel der Geberwelle durchführbar ist/sind. Insbesondere ist eine Länge des Wellenleiters frei wählbar, um den Wellenleiter an einen entsprechenden Durchmesser der Geberwelle anzupassen. Hierdurch ist der Drehgeber flexibel an unterschiedliche Durchmesser der Geberwelle anpassbar und für unterschiedliche Antriebe anwendbar.

Gemäß einem weiteren bevorzugten Ausführungsbeispiel sind zwei kreisförmig gebogene Wellenleiter um die Geberwelle anordenbar wobei die Positionsmagnete zwischen den und gleich beabstandet zu den beiden Wellenleitern sich bewegen, um jeweils zueinander inverse Positionssignale zu erzeugen. Vorzugsweise ist der Überlappungsbereich der beiden Wellenleiter in Bezug zueinander, insbesondere um 90°, versetzt angeordnet.

Der erfindungsgemäße Drehgeber kann auf ähnliche Weise durch weitere Merkmale ausgestaltet werden und zeigt dabei ähnliche Vorteile. Derartige weitere Merkmale sind beispielhaft, aber nicht abschließend in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand eines Ausführungsbeispiels erläutert. Die Figur der Zeichnung zeigt in:
- Fig. 1: eine schematische perspektive Darstellung eines bevorzugten Ausführungsbeispiels eines erfindungsgemäßen Drehgebers, und
- Fig. 2: eine schematische Schnittansicht entlang der Schnittlinie A-A des Ausführungsbeispiels des Drehgebers.

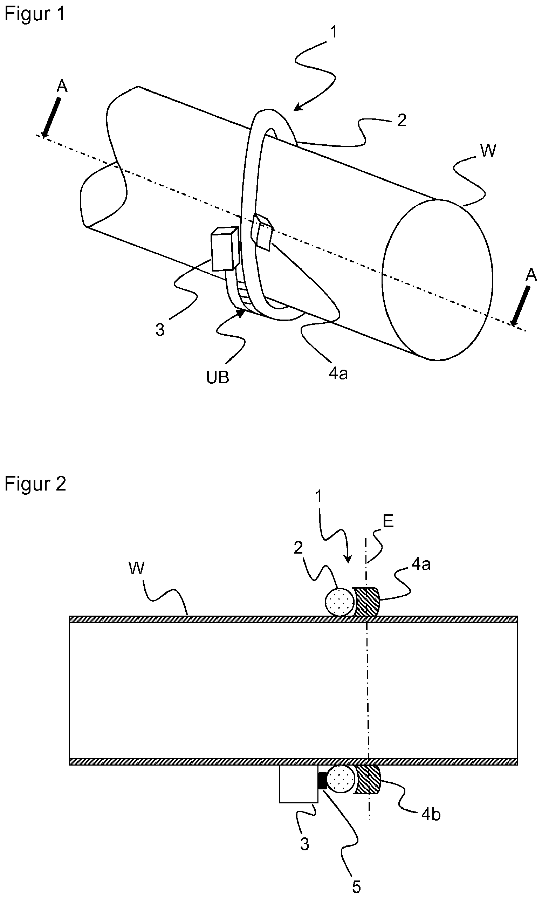

In der Figur 1 ist eine schematische perspektivische Darstellung eines bevorzugten Ausführungsbeispiels eines erfindungsgemäßen Drehgebers 1 gezeigt, der einen Drehwinkel einer Geberwelle W detektiert. Hierbei kann die Geberwelle W eine Welle eines Antriebes sein, so dass der detektierte Drehwinkel zum Regeln des Antriebes genutzt wird.

Der erfindungsgemäße Drehgeber 1 beruht auf einem magnetostriktiven Messprinzip und umfasst einen Wellenleiter 2 aus magnetostriktiven Material und einen Messwandler 3.

Der Messwandler 3 ist an einem ersten Ende des Wellenleiters 2 zur Einkopplung eines Strompulses in den Wellenleiter 2 angeordnet und zur Detektion eines von dem Wellenleiter 2 in Richtung des Messwandlers 3 geleiteten mechanischen Impulses vorgesehen.

Ferner umfasst der Drehgeber 1 ein nicht dargestelltes Dämpfungselement, das an einem zweiten Ende des Wellenleiters 2 angeordnet ist. Das Dämpfungselement dient zur Dämpfung eines in Richtung des zweiten Endes ausbreitenden mechanischen Impulses. Ferner sind mindestens zwei, in einem vorgegebenen Winkel voneinander beabstandeten Positionsmagnete 4a vorgesehen, die an die Geberwelle W so befestigbar sind, dass sie mit der Geberwelle rotieren können.

In der Ansicht der Figur 1 ist nur der Positionsmagnet 4a zu sehen, da der vorgegebene Winkel, insbesondere bei diesem Ausführungsbeispiel 180° beträgt, so dass der zweite, in der Figur 2 dargestellte Positionsmagnet 4b, auf der nicht sichtbaren Seite der Geberwelle W in der Figur 1 anordenbar ist. Jeder Positionsmagnet 4a und 4b bewirkt mit seinem Magnetfeld zusammen mit dem erzeugten Magnetfeld des Impulses des Messwandlers 3 jeweils einen mechanischen Impuls auf dem Wellenleiter 2, wobei der Messwandler 3 insbesondere derart ausgebildet ist, dass eine Position der jeweiligen Positionsmagnete 4a und 4b anhand des jeweiligen mechanischen Impulses an dem Wellenleiter 2 detektierbar ist, um zum einen eine eindeutige Unterscheidung zwischen den beiden Positionsmagneten 4a und 4b zu erhalten und zum anderen die jeweiligen Positionen der Positionsmagnete 4a und 4b zu erfassen, um daraus den Drehwinkel der Geberwelle W abzuleiten.

Erfindungsgemäß ist der Wellenleiter 2 derart zu einer Kreisform gebogen und um die Geberwelle W anordenbar dass sich ein Kreis mit einem Überlappungsbereich UB zwischen dem ersten und dem zweiten Ende des Wellenleiters 2 bildet, wobei die mindestens zwei Positionsmagnete 4a und 4b sich in einem festen Abstand und auf einer Bahn zu dem kreisförmig gebogenen Wellenleiter 2 bewegen. Hierbei befindet sich die Bahn in einer Ebene E. Das heißt, mit der Überlappung des Wellenleiters 2 zu der Kreisform und der parallelen Bewegungsbahn der Positionsmagnete 4a und 4b in einer Ebene E kann der Drehgeber 1 sehr flach ausgebildet sein.

An den Überlappungsbereich UB ist der Wellenleiter 2 vorzugsweise durch ein Isolierelement 5, wie in der Figur 2 dargestellt, isoliert, um einen elektrischen Kontakt des Wellenleiters 2 an dem Überlappungsbereich UB auszuschließen. Mittels des Isolierelements 5 kann das Biegen des Wellenleiters 2 zu der Kreisform sehr einfach durchgeführt werden. Ferner wird die Ausbreitung des erzeugten mechanischen Impulses auf dem Wellenleiter 2 nicht beeinflusst, so dass eine genaue Bestimmung des Drehwinkels der Geberwelle W gewährleistet ist.

Vorzugsweise sind drei oder mehr Positionsmagnete vorgesehen, die an die Geberwelle W anordenbar sind. Bei drei Positionsmagneten könnte der Winkelabstand 120° betragen, so dass 360° der Geberwelle W abgedeckt werden kann. Je mehr Positionsmagnete an die Geberwelle W anordenbar werden, desto mehr Signale kann der Messwandler 3 detektieren und zur Bestimmung des Drehwinkels der Geberwelle W nutzen.

Insbesondere ist ein Signalmuster eines jeweiligen sich über dem Überlappungsbereich UB befindlichen Positionsmagneten 4a oder 4b in dem Messwandler 3 hinterlegt, so dass der Messwandler 3 in der Lage ist, das Signal bzw. der ausgelöste mechanische Impuls des Positionsmagneten 4a oder 4b über dem Überlappungsbereich UB von dem Signal bzw. dem ausgelösten mechanischen Impuls des nicht über dem Überlappungsbereich UB befindlichen Positionsmagneten 4b oder 4a zu unterscheiden.

Vorzugsweise ist anstatt des Signalmusters eine Position des Überlappungsbereichs UB in Bezug auf einen Umfang des kreisförmig gebogenen Wellenleiters 2 in dem Messwandler 3 hinterlegt, so dass anhand dieser Position der Messwandler 3 das Signal des jeweiligen Positionsmagneten 4a oder 4b unterscheiden kann.

Zusätzlich ist der Messwandler 3 derart ausgebildet, dass er ein Signal des jeweiligen Positionsmagneten 4a bzw. 4b, der sich gerade über dem Überlappungsbereich UB befindet, bei der Bestimmung des Drehwinkels der Geberwelle W ignoriert. Hierdurch können eine mögliche Ungenauigkeit bzw. ein Fehler des Signals vermieden werden.

Die Figur 2 zeigt eine schematische Schnittansicht der Geberwelle W mit dem bevorzugten Ausführungsbeispiel des Drehgebers 1 entlang der Schnittebene A-A. Hierin ist eine Draufsicht auf das erste Ende des Wellenleiters 2 mit dem Messwandler 3 zu sehen, wobei die in dem vorgegebenen Winkel von vorzugsweise 180° voneinander beabstandeten Positionsmagneten 4a und 4b abgebildet sind. Die beiden Positionsmagnete 4a und 4b bewegen sich in dem festen Abstand zu dem kreisförmig gebogenen Wellenleiter 2 und vor allem in der Ebene E, die, wie in der Figur 2 abgebildet, senkrecht zum Blatt steht.

Die Positionsmagnete 4a und 4b sind insbesondere U-förmig ausgebildet, so dass eine genaue Führung der Positionsmagnete 4a und 4b entlang des Wellenleiters 2 vorgesehen werden kann.

Durch den gezeigten Aufbau des Drehgebers 1 ist der Messwandler 3 vorteilhafterweise derart ausgelegt, dass eine Singleturn- und/oder Multiturn-Messung mit einem absoluten Drehwinkel der Geberwelle W durchgeführt werden kann bzw. können. Hierbei kann der Überlappungsbereich UB beispielweise als Ausgangspunkt einer Multiturn-Messung dienen.

Weiterhin ist eine Länge des Wellenleiters 2 vorteilhafterweise frei wählbar, um den Wellenleiter 2 an einen entsprechenden Durchmesser der Geberwelle W anzupassen. Dadurch ist der Drehgeber 1 auf unterschiedliche Geberwellen W mit unterschiedlichen Wellendurchmesser aufsteckbar, so dass der Drehgeber 1 für eine große Auswahl von Antrieben anwendbar ist.

Bei einem nicht gezeigten Ausführungsbeispiel des Drehgebers 1 können zwei kreisförmig gebogene Wellenleiter 2 um die Geberwelle W anordenbar sein, wobei sich die Positionsmagnete 4a und 4b zwischen den beiden Wellenleitern 2 und gleich beabstandet zu beiden Wellenleitern 2 bewegen. Hierbei erzeugen die Positionsmagnete 4a und 4b jeweils zueinander inverse Positionssignale, so dass eine redundante Bestimmung des Drehwinkels der Geberwelle W ermöglicht ist.

Die Positionsmagnete 4a und 4b sind bei diesem nicht gezeigten Ausführungsbeispiel vorteilhafterweise H-förmig ausgebildet, so dass die Positionsmagnete 4a und 4b durch beide kreisförmig gebogenen Wellenleiter 2 geführt werden können. Hierbei ist der Überlappungsbereich UB der beiden Wellenleiter 2 in Bezug zueinander vorteilhafterweise versetzt, insbesondere um 90° angeordnet, so dass der Messwandler 3 beispielsweise die Signale von dem einen oder von dem anderen Wellenleiter 2 einfach unterscheiden kann.

### Bezugszeichenliste

- 1: Drehgeber
- 2: Wellenleiter
- 3: Messwandler
- 4a, 4b: Positionsmagnet
- 5: Isolierelement
- A-A: Schnittansicht
- E: Ebene
- UB: Überlappungsbereich
- W: Geberwelle

## Patentansprüche

1. Drehgeber (1) zum Detektieren eines Drehwinkels einer Geberwelle (W), mit
- einem Wellenleiter (2) aus magnetostriktivem Material,
- einem Messwandler (3) an einem ersten Ende des Wellenleiters (2) zur Einkopplung eines Strompulses in den Wellenleiter (2) und zur Detektion eines von dem Wellenleiter (2) in Richtung des Messwandlers (3) geleiteten mechanischen Impulses,
- einem Dämpfungselement an einem zweiten Ende des Wellenleiters (2) zur Dämpfung eines in Richtung des zweiten Endes ausbreitenden mechanischen Impulses, und
- mindestens zwei, in einem vorgegebenen Winkel voneinander beabstandeten Positionsmagnete (4a, 4b), die an der Geberwelle (W) so befestigbar sind, dass sie mit der Geberwelle rotieren können,
wobei der Wellenleiter (2) derart zu einer Kreisform gebogen und um die Geberwelle (W) anordenbar ist, dass sich ein Kreis mit einem Überlappungsbereich (UB) zwischen dem ersten und dem zweiten Ende des Wellenleiters (2) bildet, **dadurch gekennzeichnet, dass** die mindestens zwei Positionsmagnete (4a, 4b) sich in einem festen Abstand und auf einer Bahn zu dem kreisförmig gebogenen Wellenleiter (2) bewegen, wobei sich die Bahn in einer Ebene (E) befindet.

2. Drehgeber (1) nach Anspruch 1, wobei der Messwandler (3) derart ausgebildet ist, dass eine Position wenigstens einer der Positionsmagnete (4a, 4b) mit dem Wellenleiter (2) detektierbar ist, um den Drehwinkel der Geberwelle (W) zu bestimmen.

3. Drehgeber (1) nach Anspruch 1 oder 2, wobei der Wellenleiter (2) an dem Überlappungsbereich (UB) durch ein Isolierelement (5) isoliert ist, um einen elektrischen Kontakt des Wellenleiters (2) an dem Überlappungsbereich (UB) auszuschließen.

4. Drehgeber (1) nach einem der vorhergehenden Ansprüche 1 bis 3, wobei der vorgegebene Winkel 180° beträgt, um eine eindeutige Unterscheidung zwischen den beiden Positionsmagneten (4a, 4b) zu erhalten.

5. Drehgeber (1) nach einem der vorhergehenden Ansprüche 1 bis 3, wobei drei oder mehr Positionsmagnete vorgesehen sind, die jeweils in gleichen Winkelabständen voneinander beabstandet sind.

6. Drehgeber (1) nach einem der vorhergehenden Ansprüche 1 bis 5, wobei ein Signalmuster eines sich über dem Überlappungsbereich (UB) befindlichen Positionsmagneten (4a bzw. 4b) oder eine Position des Überlappungsbereichs (UB) in Bezug auf einen Umfang des kreisförmig gebogenen Wellenleiters (2) in dem Messwandler (3) hinterlegt ist.

7. Drehgeber (1) nach einem der vorhergehenden Ansprüche 1 bis 6, wobei der Messwandler (3) ein Signal des jeweiligen Positionsmagneten (4a bzw. 4b), der sich gerade über dem Überlappungsbereich (UB) befindet, bei der Bestimmung des Drehwinkels der Geberwelle (W) ignoriert.

8. Drehgeber (1) nach einem der vorhergehenden Ansprüche 1 bis 7, wobei die Positionsmagnete (4a, 4b) U-förmig oder H-förmig ausgebildet sind.

9. Drehgeber (1) nach einem der vorhergehenden Ansprüche 1 bis 8, wobei der Messwandler (3) derart ausgelegt ist, dass eine Singleturn- und/oder Multiturn-Messung mit einem absoluten Drehwinkel der Geberwelle (W) durchführbar ist/sind.

10. Drehgeber (1) nach einem der vorhergehenden Ansprüche 1 bis 9, wobei eine Länge des Wellenleiters (2) frei wählbar ist, um den Wellenleiter (2) an einem entsprechenden Durchmesser der Geberwelle (W) anzupassen.

11. Drehgeber (1) nach einem der vorhergehenden Ansprüche 1 bis 10, wobei zwei kreisförmig gebogene Wellenleiter (2) um die Geberwelle (W) anordenbar sind und die Positionsmagnete (4a, 4b) zwischen den und gleich beabstandet zu den beiden Wellenleitern (2) sich bewegen, um jeweils zueinander inverse Positionssignale zu erzeugen.

12. Drehgeber (1) nach Anspruch 11, wobei der Überlappungsbereich (UB) der beiden Wellenleiter (2) in Bezug zueinander, insbesondere um 90° versetzt angeordnet ist.

## Claims

1. Rotary encoder (1) for detecting an angle of rotation of an encoder shaft (W), with
- a waveguide (2) made of magnetostrictive material,
- a transducer (3) at a first end of the waveguide (2) for coupling a current pulse into the waveguide (2) and for detecting a mechanical pulse guided by the waveguide (2) toward the transducer (3),
- a damping element at a second end of the waveguide (2) for damping a mechanical pulse propagating in the direction of the second end, and
- at least two position magnets (4a, 4b) spaced at a predetermined angle from each other and attachable to the encoder shaft (W) so that they can rotate with the encoder shaft (W),
wherein the waveguide (2) is bent into a circular shape and can be arranged around the encoder shaft (W) in such a way that a circle with an overlapping area (UB) is formed between the first and the second end of the waveguide (2), **characterized in that**
the at least two position magnets (4a, 4b) move at a fixed distance and on a path to the circularly curved waveguide (2), the path being located in a plane (E).

2. Rotary encoder (1) according to claim 1, wherein the transducer (3) is designed in such a way that a position of at least one of the position magnets (4a, 4b) can be detected with the waveguide (2) in order to determine the angle of rotation of the encoder shaft (W).

3. A rotary encoder (1) according to claim 1 or 2, wherein the waveguide (2) is insulated at the overlap region (UB) by an insulating member (5) to preclude electrical contact of the waveguide (2) at the overlap region (UB).

4. Rotary encoder (1) according to any one of the preceding claims 1 to 3, wherein the predetermined angle is 180° to obtain a clear distinction between the two position magnets (4a, 4b).

5. A rotary encoder (1) according to any one of the preceding claims 1 to 3, wherein three or more position magnets are provided, each spaced at equal angular intervals.

6. A rotary encoder (1) according to any one of the preceding claims 1 to 5, wherein a signal pattern of a position magnet (4a or 4b) located above the overlap region (UB) or a position of the overlap region (UB) with respect to a circumference of the circularly bent waveguide (2) is stored in the transducer (3).

7. A rotary encoder (1) according to any one of the preceding claims 1 to 6, wherein the transducer (3) ignores a signal from the respective position magnet (4a or 4b) located just above the overlap region (UB) when determining the angle of rotation of the encoder shaft (W).

8. Rotary encoder (1) according to any one of the preceding claims 1 to 7, wherein the position magnets (4a, 4b) are U-shaped or H-shaped.

9. Rotary encoder (1) according to any one of the preceding claims 1 to 8, wherein the transducer (3) is designed in such a way that a single-turn and/or multi-turn measurement can be carried out with an absolute angle of rotation of the encoder shaft (W).

10. Rotary encoder (1) according to any one of the preceding claims 1 to 9, wherein a length of the waveguide (2) is freely selectable to adapt the waveguide (2) to a corresponding diameter of the encoder shaft (W).

11. Rotary encoder (1) according to any one of the preceding claims 1 to 10, wherein two circularly bent waveguides (2) can be arranged around the encoder shaft (W) and the position magnets (4a, 4b) move between and equally spaced from the two waveguides (2) to generate respective position signals inverse to one another.

12. Rotary encoder (1) according to claim 11, wherein the overlapping area (UB) of the two waveguides (2) is arranged offset with respect to each other, in particular by 90°.

## Revendications

1. Codeur rotatif (1) pour détecter un angle de rotation d'un arbre de codeur (W), avec
- un guide d'ondes (2) en matériau magnétostrictif,
- un transducteur (3) à une première extrémité du guide d'ondes (2) pour coupler une impulsion de courant dans le guide d'ondes (2) et pour détecter une impulsion mécanique guidée par le guide d'ondes (2) vers le transducteur (3),
- un élément d'amortissement à une deuxième extrémité du guide d'ondes (2) pour amortir une impulsion mécanique se propageant dans la direction de la deuxième extrémité, et
- au moins deux aimants de position (4a, 4b) espacés d'un angle prédéterminé l'un par rapport à l'autre et pouvant être fixés à l'arbre du codeur (W) de manière à pouvoir tourner avec l'arbre du codeur (W),
dans lequel le guide d'ondes (2) est plié en forme circulaire et peut être disposé autour de l'arbre du codeur (W) de telle manière qu'un cercle avec une zone de chevauchement (UB) est formé entre la première et la deuxième extrémité du guide d'ondes (2), **caractérisé en ce que**
les au moins deux aimants de position (4a, 4b) se déplacent à une distance fixe et sur un trajet vers le guide d'ondes (2) courbé circulairement, le trajet étant situé dans un plan (E).

2. Codeur rotatif (1) selon la revendication 1, dans lequel le transducteur (3) est conçu de telle sorte qu'une position d'au moins un des aimants de position (4a, 4b) peut être détectée avec le guide d'ondes (2) afin de déterminer l'angle de rotation de l'arbre du codeur (W).

3. Codeur rotatif (1) selon la revendication 1 ou 2, dans lequel le guide d'ondes (2) est isolé au niveau de la zone de chevauchement (UB) par un élément isolant (5) pour empêcher un contact électrique du guide d'ondes (2) au niveau de la zone de chevauchement (UB).

4. Codeur rotatif (1) selon l'une des revendications précédentes 1 à 3, dans lequel l'angle prédéterminé est de 180° pour obtenir une distinction claire entre les deux aimants de position (4a, 4b).

5. Codeur rotatif (1) selon l'une des revendications précédentes 1 à 3, dans lequel trois aimants de position ou plus sont prévus, chacun espacé à des intervalles angulaires égaux.

6. Codeur rotatif (1) selon l'une des revendications précédentes 1 à 5, dans lequel un modèle de signal d'un aimant de position (4a ou 4b) situé au-dessus de la zone de chevauchement (UB) ou une position de la zone de chevauchement (UB) par rapport à une circonférence du guide d'ondes (2) courbé circulairement est stocké dans le transducteur (3).

7. Codeur rotatif (1) selon l'une des revendications précédentes 1 à 6, dans lequel le transducteur (3) ignore un signal provenant de l'aimant de position respectif (4a ou 4b) situé juste au-dessus de la zone de chevauchement (UB) lors de la détermination de l'angle de rotation de l'arbre du codeur (W).

8. Codeur rotatif (1) selon l'une des revendications précédentes 1 à 7, dans lequel les aimants de position (4a, 4b) sont en forme de U ou en forme de H.

9. Codeur rotatif (1) selon l'une des revendications précédentes 1 à 8, dans lequel le transducteur (3) est conçu de telle sorte qu'une mesure monotour et/ou multi- tour peut être effectuée avec un angle de rotation absolu de l'arbre du codeur (W).

10. Codeur rotatif (1) selon l'une des revendications précédentes 1 à 9, dans lequel une longueur du guide d'ondes (2) est librement sélectionnable pour adapter le guide d'ondes (2) à un diamètre correspondant de l'arbre du codeur (W).

11. Codeur rotatif (1) selon l'une des revendications précédentes 1 à 10, dans lequel deux guides d'ondes (2) courbés circulairement peuvent être disposés autour de l'arbre du codeur (W) et les aimants de position (4a, 4b) se déplacent entre les deux guides d'ondes (2) et à égale distance de ceux-ci pour générer des signaux de position respectifs inverses les uns des autres.

12. Codeur rotatif (1) selon la revendication 11, dans lequel la zone de chevauchement (UB) des deux guides d'ondes (2) est disposée de manière décalée l'une par rapport à l'autre, notamment de 90°.
